# EUROPÄISCHE PATENTANMELDUNG

(11) **EP 4 628 776 A1**
(43) Veröffentlichungstag der Anmeldung: **08.10.2025**
(21) Anmeldenummer: 25166393.6
(22) Anmeldetag: 26.03.2025
(51) Int. Cl.: F16L 37/088

(54) **HALTEKLAMMER FÜR EINEN SCHNELLVERBINDER SOWIE SCHNELLVERBINDER MIT ZUMINDEST EINER SOLCHEN HALTEKLAMMER**

(30) Priorität: 05.04.2024 DE 102024109597
(71) Anmelder: Voss Automotive GmbH, 51688 Wipperfürth (DE)
(72) Erfinder: Waschkewitz, Markus, 51702 Bergneustadt (DE); Heß, Andreas, 51688 Wipperfürth (DE); Engelhard, Frank, 42929 Wermelskirchen (DE); Oberdörfer, Alexander, 42477 Radevormwald (DE); Heinrichs, Eugen, 51702 Bergneustadt (DE)
(74) Vertreter: Rebbereh, Cornelia

(57) **Zusammenfassung**

Halteklammer (4) für einen Schnellverbinder (1), umfassend zumindest zwei Haltearme (41, 42) und zumindest ein zwischen diesen angeordnetes und diese verbindendes Zwischenstück (40), wobei sich die Haltearme (41, 42) in einer ersten Ebene (E1) erstrecken und das Zwischenstück (40) zumindest eine Steuerschlaufe (43) umfasst, wobei zumindest ein Teil des Zwischenstücks (40) und/oder der Steuerschlaufe (43) sich aus der ersten Ebene (E1) heraus in eine zweite Ebene (E2) und aus dieser/diesen wieder zurück in die erste Ebene (E1) erstreckt/erstrecken. Schnellverbinder (1) mit einer solchen Halteklammer (4), umfassend einen Anschlussport (2) mit rampenförmiger Anschlusskontur (21) und einem Rastbundabschnitt (22) und zumindest einen Steckerkörper (3) zur Aufnahme der Halteklammer, wobei der Steckerkörper (3) zumindest zwei Kulissen (130, 131) mit jeweils zumindest zwei Rasttaschenbereichen (132, 133, 134, 135) zur Aufnahme der Haltearmenden (44, 45) der Halteklammer (4) aufweist.

## Beschreibung

Die Erfindung betrifft eine Halteklammer für einen Schnellverbinder, wobei die Halteklammer zumindest zwei Haltearme und zumindest ein zwischen diesen angeordnetes und diese verbindendes Zwischenstück umfasst, und wobei die Haltearme der Halteklammer sich zumindest im Wesentlichen in einer ersten Ebene erstrecken, sowie einen Schnellverbinder mit zumindest einer solchen Halteklammer, wobei der Schnellverbinder zumindest einen Anschlussport mit zumindest teilweise rampenförmiger Anschlusskontur und zumindest einem Rastbundabschnitt und zumindest einen Steckerkörper umfasst und die zumindest eine Halteklammer Haltearme mit Haltearmenden aufweist.

Halteklammern sowie Steckverbinder mit solchen sind im Stand der Technik bekannt. Halteklammern dienen dabei dazu, ein Verriegeln einer Steckposition eines Steckerkörpers in einem Anschlussport des Schnellverbinders zu ermöglichen. Je nach Ausgestaltung der Halteklammer ist ein lösbares oder ein unlösbares Arretieren bzw. Verriegeln möglich. Beispielsweise ist aus der EP 1 781 979 B1 eine Steckverbindung für Fluidleitungen bekannt, die eine Verriegelungseinrichtung und zwei zusammensteckbare Kupplungsteile umfasst, die im zusammengesteckten Zustand über die Verriegelungseinrichtung lösbar arretiert werden können. Die Verriegelungseinrichtung besteht einerseits aus zwei äußeren, radialen, flanschartigen und mit gleichem Durchmesser im gesteckten Zustand axial, in Steckrichtung benachbarten Haltestegen der beiden Kupplungsteile und andererseits aus einem Halteelement, welches mit zumindest einem im Axialschnitt C-förmigen Halteabschnitt die axial benachbarten Haltestege der beiden Kupplungsteile formschlüssig axial und radial umgreift. Das Halteelement ist derart ausgebildet und an dem einen der beiden Kupplungsteile derart unverlierbar vormontiert, dass es einerseits axial und radial fixiert und andererseits im Bereich des/jedes Halteabschnitts radial elastisch beweglich ist. Das Halteelement ist im Bereich des/jedes Halteabschnitts und der Haltesteg des anderen Kupplungsteils in Anpassung aneinander zur Bildung einer in Steckrichtung formschlüssigen Rastverbindung ausgebildet. Das Halteelement ist zumindest anteilig als Kunststoff-Formteil ausgebildet, insbesondere zur Verwendung der Steckverbindung bei höherem Hydraulikdrücken aus Metall, wie beispielsweise Messing.

Aus der US 7 699 356 B2 ist ein Schnellverbinder bekannt, der entweder ein gerades oder ein gewinkeltes Kupplungselement, ein Steckerelement, das mit einem Heizkörper, einer Buchse, einem Dichtelement und einem Verriegelungsring verbunden ist, umfasst, welche Komponenten die Verbindung zwischen dem Steckerelement und dem Kupplungselement aufrecht erhalten. Das Steckerelement weist zumindest eine angefaste Oberfläche auf, die komplementär zu einer angefasten Oberfläche des Buchsenelementes ist. Der Verriegelungsring ist um das Kupplungselement herum angeordnet und weist eine Anzahl von Einbuchtungen auf, die durch Öffnungen hindurchragend um ein Kragenende des Kupplungselements herum angeordnet sind. Diese Einbuchtungen stellen eine Zwischenverbindung zu einer ringförmigen Nut um das Steckerelement herum dar, sobald dieses in das Kupplungselement eingesteckt ist, und sichern die Verbindung. Der Verriegelungsring ist im Wesentlichen c-förmig und weist gleichmäßig beabstandet zueinander die Einbuchtungen auf. Eine dieser Einbuchtungen ist jeweils proximal an jedem der distalen Enden des Verriegelungsrings und eine zwischen den beiden angeordnet. Sobald der Verriegelungsring in der ringförmigen Nut eines Aufnahmeendes des Kupplungselements angeordnet ist, ragen die Einbuchtungen durch jeweils einen Schlitz in dem Aufnahmeende des Kupplungsteils hindurch, um nach dem Ineinanderfügen von Kupplungselement und Steckerelement in die ringförmige Nut auf der Außenseite des Steckerelements einzugreifen.

Aus der DE 103 46 712 A1 ist eine Steckverbindung für Rohr- und Schlauchleitungen, bestehend aus einem Stutzen mit einer zumindest teilweise am Außenumfang umlaufenden Rastschulter bekannt, die aus einer vom Außenumfang ansteigenden Schräge und einer sich in Einsteckrichtung dahinter anschließenden Rastfläche gebildet ist, sowie einem mit dem Stutzen über zumindest zwei voneinander beabstandet angeordnete Raststellen an der Rastfläche des Stutzens verrastbaren Stecker, die eine radial verschiebbare, etwa o-förmige Rastfeder trägt, deren beide Seitenschenkel als Rastschenkel ausgebildet sind. Die Rastfeder bildet zumindest eine weitere, etwa mittige Raststelle zwischen dem Stecker und dem Stutzen, wobei diese weitere Raststelle in Einsteckrichtung den beiden seitlichen Raststellen vorausläuft. Beim Einstecken des Stutzens in den Stecker rastet zunächst die mittlere Rastverbindung an der Rastfeder mit der Rastfläche am Stutzen ein und hieraus erfolgt eine radial einwärts gerichtete, sich relativ bewegende Rastfeder am Stecker, die mit axialem Versatz die beiden seitlichen Rastschenkel der Rastfeder zur Einrastung an der Rastfläche des Stutzens bringt. Die weitere, etwa mittige Raststelle ist als radial einwärts gerichteter Steuerbügel an der Rastfeder ausgebildet.

Insbesondere bei einem Steckvorgang mit der Rastfeder gemäß der DE 103 46 712 A1 kann es zu Fehlsteckungen kommen, wenn in der Position, in der sich der Radius der Rastfeder am Scheitelpunkt des entsprechenden Gegenkörpers befindet, sich derjenige, der den Steckvorgang durchführt, dazu entscheidet, diesen wieder abzubrechen, da dann die Rastfeder in die verschlossene Position rutschen kann und ein vollständiger Steckvorgang hierdurch angenommen wird, obgleich dieser nicht vorliegt . Eine solche Fehlsteckungsmöglichkeit sollte jedoch bei einer Halteklammer für einen Schnellverbinder ausgeschlossen werden.

Aus der US 2015/0176738 A1 ist ein Verbinder mit einem zylindrischen Verbindergehäuse mit Durchgangsöffnungen, die sich in Umfangsrichtung rechts und links erstrecken, bekannt. Der Verbinder enthält ferner ein zylindrisches Steckerelement zum Einfügen in das Verbindergehäuse, wobei das zylindrische Steckerelement eine umfangsseitige Nut in Übereinstimmung mit den Durchgangsöffnungen in einem Zustand aufweist, in dem das Steckerelement in das Verbindergehäuse eintritt. Der Verbinder umfasst ferner ein elastisches Verriegelungselement mit einem Zwischenabschnitt und rechte und linke Armabschnitte, die sich nach rechts und links von dem Zwischenabschnitt weg erstrecken zur Aufnahme in den Durchgangsöffnungen. Schräg verlaufende Gleitflächen, mit denen die losen Enden der Armabschnitte des Verriegelungselements in Eingriff gelangen sollen, sind am äußeren Umfang des Verbindergehäuses angeordnet. Das Verriegelungselement ist aus einem elastischen Draht gebildet, der einen in Richtung nach oben konvex geformten Verbindungsabschnitt aufweist. Der Verbindungsabschnitt umfasst einen u-förmigen Betätigungsabschnitt, der in tangentialer Richtung des Verbindergehäuses ausgebaucht ist. Der Betätigungsabschnitt ist schmaler als ein mittlerer Hohlraum einer Verriegelungselement-Haltewand, die in dem Verbindergehäuse ausgebildet ist. Wenn ein Steckerelement und das Verbindergehäuse voneinander gelöst werden sollen, wird auf den Betätigungsabschnitt des Verriegelungselements ein Druck von oben ausgeübt, so dass Spitzenabschnitte nach unten entlang den schrägstehenden Flächen gleiten und die Armabschnitte sich aufspreizen zum Öffnen nach links und rechts. Beim Aufspreizen der Armabschnitte gelangen die Armabschnitte aus einer Eingriffsnut des Steckerelements heraus, so dass der Eingriff gelöst und ein Herausziehen des Steckerelements ermöglicht wird.

Die DE 197 40 115 A1 offenbart eine Steckverbindung zwischen schlauch- oder rohrförmigen Bauteilen mit einer dem einen Bauteil zugeordneten Muffe, die einen zylindrischen Aufnahmekörper aufweist, in den ein zylindrischer Steckkörper eines dem anderen Bauteil zugeordneten Steckers eingesteckt ist, wobei Sicherungsmittel vorgesehen sind, die den eingesteckten Stecker in der Muffe sichern. Der Steckkörper weist im Bereich seines axial freien Endes einen radial nach außen stehenden ringförmig umlaufenden Wulst auf. Im Innern des Aufnahmekörpers ist eine ringförmige Sitzfläche vorgesehen, auf der der Wulst des eingesteckten Steckers etwa kreislinienförmig aufliegt. Im Aufnahmekörper sind ferner zwischen dessen axial freien Ende und der Sitzfläche Öffnungen vorgesehen, die etwa in einer axialen Ebene des Aufnahmekörpers liegen. Die Sicherungsmittel sind aus einer etwa u-förmigen Federklammer gebildet, deren Schenkel in die Öffnungen einführbar sind und bei eingestecktem Stecker am Wulst auf dessen der Sitzfläche abgewandten Seite axial zur Anlage kommen.

Der vorliegenden Erfindung liegt daher die Aufgabe zugrunde, eine Halteklammer für einen Schnellverbinder, wobei die Halteklammer zumindest zwei Haltearme und zumindest ein zwischen diesen angeordnetes und diese verbindendes Zwischenstück umfasst, sowie einen entsprechenden Schnellverbinder mit zumindest einer solchen Halteklammer vorzusehen, wobei der Schnellverbinder zumindest einen Anschlussport mit zumindest teilweise rampenförmiger Anschlusskontur und zumindest einen Steckerkörper umfasst und die zumindest eine Halteklammer Haltearme mit Haltearmenden aufweist, mittels derer eine eindeutige Steckkontrolle und somit erhöhte Stecksicherheit gegenüber den Lösungen des Standes der Technik erzielt werden kann.

Die Aufgabe wird für eine Halteklammer nach dem Oberbegriff des Anspruchs 1 dadurch gelöst, dass das zumindest eine Zwischenstück der Halteklammer zumindest eine Steuerschlaufe umfasst, wobei zumindest ein Teil des zumindest einen Zwischenstücks und/oder zumindest einen Steuerschlaufe sich aus der ersten Ebene heraus in eine zweite Ebene und aus dieser/diesen wieder zurück in die erste Ebene erstreckt/erstrecken. Für einen Schnellverbinder nach dem Oberbegriff des Anspruchs 10 wird die Aufgabe dadurch gelöst, dass der zumindest eine Steckerkörper zur Aufnahme der zumindest einen Halteklammer ausgebildet ist und dient, wobei der zumindest eine Steckerkörper zumindest zwei Kulissen mit jeweils zumindest zwei Rastaschenbereichen zur Aufnahme von Haltearmenden der Halteklammer aufweist. Weiterbildungen der Erfindung sind in den abhängigen Ansprüchen definiert.

Dadurch werden eine Halteklammer für einen Schnellverbinder und ein Schnellverbinder mit einer solchen vorgesehen, bei denen es aufgrund der besonderen Formgebung der Halteklammer nicht mehr zu Fehlsteckungen kommen kann, selbst wenn eine einen Steckvorgang vornehmende Person sich zum Abbruch des noch nicht vollständig durchgeführten Steckvorgangs entscheidet. Bei der vorliegenden Halteklammer kann durch deren Steuerschlaufe eine Fehlsteckung vermieden werden, da durch diese so lange eine Führung auf der zumindest teilweise rampenförmigen Anschlusskontur des Anschlussports zur Verfügung gestellt werden kann, bis der Steckvorgang von Steckerkörper und Anschlussport vollständig abgeschlossen ist. Die Steuerschlaufe der Halteklammer dient dabei dazu, die Halteklammer bis zum Erreichen der endgültigen Steckposition von Steckerkörper und Anschlussport, also bis zum Abschluss des Steckvorgangs, offen zu halten, also die beiden Haltearme der Halteklammer bis zum Abschluss des Steckvorgangs in einer geöffneten Position zu halten. Erst dann, wenn die Steuerschlaufe unter den zumindest einen Rastbundabschnitt des Anschlussports gelangt und dort anliegt, gibt sie hierbei die Haltearme frei. Die Haltearme der Halteklammer können sich aufeinander zu in die geschlossene Position der Halteklammer bewegen. Die Steuerschlaufe stützt sich dann an dem zumindest einen Rastbundabschnitt ab. Sobald die Haltearme dadurch freigegeben werden, dass sie die zumindest teilweise rampenförmige Anschlusskontur des Anschlussports verlassen und unter diese eintauchen können, erfolgt vorteilhaft nicht nur eine Radialbewegung der Haltearme in Richtung des Anschlussports und des in diesem aufgenommenen Steckerkörpers, sondern auch eine Radialbewegung der Steuerschlaufe der Halteklammer in Richtung des Anschlussports. Hierdurch taucht die Steuerschlaufe weiter unter den zumindest einen Rastbundabschnitt ein, anliegend an diesem.

Unter einem Rastbundabschnitt werden vorliegend sowohl ein vollständig umlaufender Rastbund des Anschlussports als auch einzelne Rastbundabschnitte oder Rastnasen, somit ein segmentierter Rastbund an dem Anschlussport verstanden. Unter einer rampenförmigen Anschlusskontur werden vorliegend sowohl eine umlaufende rampenförmige Anschlusskontur als auch einzelne rampenförmige Anschlusskonturabschnitte verstanden.

Beim Zufahren des Schnellverbinders, somit Aufeinanderzubewegen von Steckerkörper und Anschlussport, stützt sich der zumindest eine Teil des zumindest einen Zwischenstücks bzw. der zumindest einen Steuerschlaufe, der sich aus der ersten Ebene heraus in die zweite Ebene erstreckt, auf der zumindest einen rampenförmigen Anschlusskontur oder einem rampenförmigen Anschlusskonturabschnitt ab und gleitet beim weiteren Zufahren des Schnellverbinders entlang der rampenförmigen Anschlusskontur so lange herab, bis der äußere Rand der rampenförmigen Anschlusskontur überschritten wird und die Steuerschlaufe der Halteklammer beim weiteren Zufahren von Steckerkörper und Anschlussport des Schnellverbinders unter den zumindest einen Rastbundabschnitt, der vorteilhaft auf der gegenüberliegenden Seite der rampenförmigen Anschlusskontur des Anschlussports angeordnet ist, gelangt. Die Haltearme der Halteklammer sind in der ersten Ebene angeordnet, die zumindest eine Steuerschlaufe erstreckt sich ausgehend von den Haltearmen aus der ersten Ebene heraus in die zweite Ebene, unter gleichzeitigem radialen Einziehen der Steuerschlaufe in Richtung auf eine Mittelachse der Steuerschlaufe bzw. der Halteklammer zu, also unter Reduzieren des Abstands zwischen den beiden Steuerabschnitten, und aus der zumindest einen zweiten Ebene wieder zurück in die erste Ebene, in der vorteilhaft ein mittlerer, insbesondere u-förmiger, Schlaufenabschnitt angeordnet ist. Durch das Einziehen der Steuerschlaufe radial nach innen in Richtung auf die Mittelachse der Halteklammer zu ist ein Steuern der Haltearme der Halteklammer nach außen möglich. Die Haltearme der Halteklammer werden daher während des Zufahrens des Schnellverbinders in der ersten Ebene offen gehalten. Sie gleiten zeitversetzt zu der Steuerschlaufe ebenfalls über die zumindest teilweise rampenförmige Anschlusskontur des Anschlussports und gelangen vorteilhaft erst zusammen mit dem in der ersten Ebene angeordneten Abschnitt der Steuerschlaufe unter den zumindest einen Rastbundabschnitt des Anschlussports. Erst dort bewegen sich die beiden Haltearme in die geschlossene Position der Halteklammer, somit bezüglich des Schnellverbinders in Richtung radial nach innen zu dem Anschlussport hin, in den der Steckerkörper dann vollständig eingesteckt ist.

Die Haltearme umfassen endseitig ein jeweiliges Haltearmende. Vorteilhaft ist ein jeweiliges Haltearmende gegenüber der Erstreckung der Haltearme in der ersten Ebene abgewinkelt, insbesondere rechtswinklig von diesen abgewinkelt. Die Halteklammer wird in an dem Steckerkörper angeordnet. Zur Aufnahme der Halteklammer weist der Steckerkörper zumindest einen Aufnahmebereich auf. Die beiden abgewinkelten Haltearmenden der beiden Haltearme der Halteklammer liegen während des Auslieferungszustands des Steckerkörpers und des gesamten Steckvorgangs des Steckerkörpers auf dem Anschlussport in den zumindest zwei Kulissen mit den jeweils zumindest zwei Rasttaschenbereichen des Steckerkörpers. Während des Steckvorgangs des Schnellverbinders bewegen sie sich innerhalb der zumindest zwei Kulissen bzw. der Rasttaschenbereiche bzw. zwischen diesen. Vorteilhaft liegen die beiden Haltearmenden im Auslieferungszustand des mit der Halteklammer versehenen Steckerkörpers des Schnellverbinders in einem anderen Rasttaschenbereich als in der Position des vollständig gesteckten Schnellverbinders, also in der endgültigen Steckposition des Steckerkörpers im Anschlussport des Schnellverbinders.

Zwischen den zumindest zwei Rasttaschenbereichen der zumindest zwei Kulissen kann weiter vorteilhaft jeweils zumindest eine Kante zum Abtrennen der zumindest zwei Rasttaschenbereiche voneinander angeordnet sein. Während des Steckvorgangs gleitet jedes der Haltearmenden aus dem einen Rasttaschenbereich über die zumindest eine Kante in den benachbarten Rasttaschenbereich. Die zumindest eine Kante zwischen den zumindest zwei Rasttaschenbereichen der zumindest zwei Kulissen des Steckerkörpers des Schnellverbinders hält im Auslieferungszustand von diesem die Halteklammer davon ab, mit ihren jeweiligen Haltearmenden in den Rasttaschenbereich zu gleiten, der von den Haltearmenenden der Halteklammer in der Endposition des Steckvorgangs eingenommen wird. Würden die Haltearmeenden nicht davon abgehalten werden, direkt in diesen jeweiligen Rasttaschenbereich, in dem die Haltearmenden in der Endposition des Steckvorgangs liegen, bereits im Auslieferungszustand oder nach dem ersten Kontakt von Halteklammer und Anschlussport bzw. dessen zumindest teilweise rampenförmiger Anschlusskontur zu gleiten, wäre ein Steckvorgang nicht mehr möglich, da die Halteklammer den Steckweg blockieren würde.

Die Halteklammer ist weiter vorteilhaft in der Draufsicht etwa w-förmig, wobei sich die Steuerschlaufe in der Draufsicht auf die Halteklammer räumlich zwischen den Haltearmen erstreckt. Die Haltearme der Halteklammer umfassen weiter vorteilhaft einen konvexen Abschnitt, zumindest einen geraden Abschnitt und einen gebogenen Abschnitt, mit dem sie in die Steuerschlaufe übergehen. Der gebogene Abschnitt der Haltearme ist weiter vorteilhaft direkt benachbart zu dem zumindest einen geraden Abschnitt und dieser direkt benachbart zu dem konvexen Abschnitt des jeweiligen Haltearms der Halteklammer ausgebildet, die Abschnitte schließen somit aneinander an. Hierdurch kann zum einen die federnde Wirkung zum Offenhalten der Halteklammer sichergestellt werden, solange nicht die endgültige Steckposition von Steckerkörper und Anschlussport erreicht ist, zum anderen kann durch den konvexen Abschnitt die Halteklammer radial nach innen in Richtung des Anschlussports eingezogen werden, sobald die Steuerschlaufe unter den Rastbundabschnitt der rampenförmigen Anschlusskontur gleiten kann. Durch die Spreizung der federnden Haltearme der Halteklammer wird eine Federvorspannung für eine radial einziehende Bewegung in Richtung des Anschlussports erzeugt.

Vorteilhaft umfasst die Steuerschlaufe den mittleren Schlaufenabschnitt und zwei sich an diesen anschließende, zumindest zweifach gebogene Steuerabschnitte. Die Steuerschlaufe umfasst somit zwei zweifach gebogene Steuerabschnitte, ist somit vorteilhaft zumindest zweifach gekröpft ausgebildet. Die zweifach gebogenen Steuerabschnitte der Steuerschlaufe sind in zwei Richtungen gekrümmt oder gekröpft, wobei sie vorteilhaft radial in Richtung auf eine Mittelachse der Halteklammer eingezogen oder tailliert sind und sich in Höhenerstreckung der Halteklammer von dem in der ersten Ebene angeordneten mittleren Schlaufenabschnitt der Steuerschlaufe ausgehend in die zweite Ebene und aus dieser wieder zurück in die erste Ebene erstrecken. Die Steuerschlaufe umfasst weiter vorteilhaft als mittleren Schlaufenabschnitt den u-förmigen Schlaufenabschnitt, der einen mittleren Abschnitt und zwei Seitenschenkel umfasst, sowie die beiden sich an den u-förmigen Schlaufenabschnitt bzw. dessen beide Seitenschenkel anschließenden, sich in die zweite Ebene und wieder zurück in die erste Ebene erstreckenden und an die Haltearme der Halteklammer anschließenden, zweifach gebogenen Steuerabschnitte. Die beiden zweifach gebogenen Steuerabschnitte der Steuerschlaufe gehen vorteilhaft in die beiden gebogenen Abschnitte der beiden Haltearme der Halteklammer über. Insbesondere erstreckt sich nur der mittlere Abschnitt des u-förmigen Schlaufenabschnitts in der ersten Ebene bzw. zumindest im Wesentlichen in der ersten Ebene. Die beiden Seitenschenkel des u-förmigen Schlaufenabschnitts erstrecken sich vorteilhaft etwa parallel zueinander, also mit einem gleichbleibenden Abstand zueinander und aus der ersten Ebene heraus. Sie gehen in die beiden zweifach gebogenen Steuerabschnitte über. Die beiden zweifach gebogenen Steuerabschnitte der Steuerschlaufe sind weiter vorteilhaft in zwei Richtungen gekrümmt bzw. gekröpft und radial nach innen in Richtung einer Mittelachse der in der Draufsicht zumindest im Wesentlichen symmetrisch aufgebauten Halteklammer eingezogen oder tailliert und erstrecken sich in Höhenrichtung der Halteklammer von dem in der ersten Ebene angeordneten mittleren Schlaufenabschnitt der Steuerschlaufe ausgehend in die zweite Ebene und aus dieser wieder zurück in die erste Ebene, so dass hierdurch eine Federwirkung und zugleich eine Stabilität erzielt werden kann. Aufgrund dieser radial nach innen in Richtung auf die Mittelachse der Halteklammer eingezogenen bzw. taillierten Formgebung mit den mehrfachen Krümmungen bzw. Kröpfungen der Steuerschlaufe und auch durch die gebogenen Abschnitte der Haltearme der Halteklammer kann eine Federwirkung einerseits und ein Offenhalten der Halteklammer unter Vorspannung beim Überstreichen der rampenförmigen Anschlusskontur des Anschlussports andererseits aufrechterhalten werden.

Die zumindest eine Steuerschlaufe erstreckt sich somit in Höhenerstreckung der Halteklammer ausgehend von den beiden Haltearmen der Halteklammer, die sich in der ersten Ebene erstrecken, aus der ersten Ebene heraus in die zweite Ebene und wieder zurück in die erste Ebene. Zusätzlich ist sie hierbei auch radial in Richtung zu einer sich in Höhenerstreckung der Halteklammer erstreckenden Mittelachse der Steuerschlaufe eingezogen bzw. tailliert und erstreckt sich sodann aus der zumindest einen zweiten Ebene wieder zurück in die erste Ebene. Der u-förmige Schlaufenabschnitt weist eine geringere Breitenerstreckung auf als dem Abstand der beiden gebogenen Steuerabschnitte im Bereich von deren jeweiligem Übergang in die beiden Haltearme der Halteklammer entspräche. Hierdurch ergibt sich die Taillierung bzw. der Einzug in Richtung der Mittelachse der Halteklammer bzw. von deren Steuerschlaufe. Diese Formgebung unterscheidet sich entscheidend von der des Standes der Technik der US 2015/0176738 A1. Bei diesen ist der u-förmige Betriebsabschnitt des zwischen den beiden Armen des Verriegelungselements angeordneten Verbindungsabschnitts lediglich aus der Ebene der beiden Arme heraus in eine zweite Ebene gebogen. Der u-förmige Betriebsabschnitt ist keine Steuerschlaufe und weist keine zweifach gekrümmten oder gebogenen Steuerabschnitte auf, ist nicht tailliert geformt. Er ist lediglich u-förmig mit einem mittleren Abschnitt und zwei sich parallel zueinander erstreckenden Seitenabschnitten, die in den in der Ebene der Arme angeordneten Verbindungsabschnitt übergehen. Daher ist es mit dem Verriegelungselement nach diesem Stand der Technik nicht möglich, eine Steuerung der Arme nach außen zum Offenhalten des Verriegelungselements vorzunehmen.

Die gemäß der vorliegenden Erfindung mögliche eindeutige Steckkontrolle ist auch mit der Federklammer gemäß der DE 197 40 115 A1 nicht möglich. Die Federklammer gemäß diesem Stand der Technik kann nicht als Steuerschlaufe und auch nicht als Steuerelement oder Indikator für eine sichere Steckung von Stecker und Muffe dienen. Der schleifenförmige Abschnitt der Federklammer bei diesem Stand der Technik liegt lediglich am Gehäuseumfang des Aufnahmekörpers an, wird jedoch nicht radial nach außen gesteuert, denn die Federklammer im Bereich von deren mittlerer Schleife hat keinen Kontakt zu dem Stecker, kann somit durch diesen auch nicht nach außen gesteuert werden. Die schleifenförmig gebogene Basis der Federklammer dient zum Angreifen beim Trennen der Verbindung von Stecker und Muffe. Im Unterschied zum Stand der Technik der DE 197 40 115 A1 durchgreift die Halteklammer gemäß der vorliegenden Erfindung den Schnellverbinder bzw. dessen Anschlussport und stützt sich am Steckerkörper ab. Der in Richtung der Mittelachse der Halteklammer bzw. von deren Steuerschlaufe eingezogene bzw. taillierte Bereich von dieser stützt sich aufgrund seiner in die erste Ebene zurückgeführten oder zurückspringenden Formgebung über den gesamten Steckvorgang hinweg am vorstehenden Kragen des Steckerkörpers ab. Dadurch bleibt die Halteklammer auch über den gesamten Steckvorgang hinweg nach außen gestellt. Hierdurch ergibt sich eine optische und haptische Kontrollmöglichkeit dahingehend, ob der Steckvorgang erfolgreich abgeschlossen ist oder nicht. Würde der Steckvorgang von einem Werker vorzeitig abgebrochen, bleibt die Halteklammer so lange nach außen ausgestellt, bis sich der Steckerkörper nahezu vollständig wieder aus dem Anschlussport herausbewegt hat. Der Steckerkörper würde dementsprechend nicht selbstständig in dem Anschlussport verbleiben. Mit der erfindungsgemäßen Halteklammer kann es also nicht passieren, dass diese bei nicht vollständig abgeschlossenem Steckvorgang, also nicht vollständig in den Anschlussport eingestecktem Steckerkörper, sich wieder radial nach innen in Richtung der Mittelachse der Halteklammer einzieht und eine vollständige Steckung suggeriert. Genau eine solche Fehlsteckung kann jedoch beim Stand der Technik der DE 197 40 115 A1 auftreten. Würde ein Werker bei einer solchen Steckverbindung des Standes der Technik bis auf den höchsten Punkt der Wulsts bzw. Haltewulsts am Stecker stecken und dann den Steckvorgang abbrechen, bewegen sich die Schenkel der Federklammer nach innen, jedoch im schlechtesten Fall nicht hinter die ringförmig umlaufende Wulst, sondern vor diese. Dies lässt sich jedoch von außen insbesondere dann nicht erkennen, wenn der Stecker nur wenige Millimeter weiter axial aus der Muffe herausragt als dies bei einem vollständig abgeschlossenen Steckvorgang der Fall wäre. Dies kann besonders dann sehr gefährlich werden, wenn unter Systemdruck die Verbindung von Stecker und Muffe getrennt wird, der Stecker somit aus der Muffe herausgedrückt wird. Dieses Problem kann jedoch mit der Halteklammer gemäß der vorliegenden Erfindung sicher verhindert werden.

Der jeweilige konvexe Abschnitt des jeweiligen Haltearms der Halteklammer geht weiter vorteilhaft in einen etwa geraden Abschnitt und dieser endseitig in das jeweilige abgewinkelte Haltearmende über. Hierdurch ist eine exakte Positionierung der jeweiligen Haltearmenden in den Rasttaschenbereichen der zumindest zwei Kulissen am Steckerkörper des Schnellverbinders möglich.

Der Anschlussport weist vorteilhaft zumindest eine Rastkontur auf, die den zumindest einen Rastbundabschnitt umfasst. Dieser dient dem Angreifen durch die zumindest eine Steuerschlaufe der Halteklammer. Insbesondere umfasst die zumindest eine Rastkontur den zumindest einen Rastbundabschnitt auf ihrer Unterseite und die zumindest eine rampenförmige Anschlusskontur zum Aufstützen der Halteklammer mit ihren gebogenen Steuerabschnitten auf ihrer Oberseite. Der zumindest eine Rastbundabschnitt des Anschlussports wird von der zumindest einen Steuerschlaufe der Haltklammer untergriffen. Die zumindest teilweise rampenförmige Anschlusskontur ist vorteilhaft auf der Oberseite der beim Steckvorgang in Richtung des Steckerkörpers gerichteten Rastkontur des Anschlussports ausgebildet und der zumindest eine Rastbundabschnitt auf der gegenüberliegenden Unterseite von dieser. Der zumindest eine Rastbundabschnitt ist weiter vorteilhaft im Wesentlichen eben ausgebildet. Die rampenförmige Anschlusskontur weist vorteilhaft eine solche Formgebung und insbesondere Steigung auf, dass beim Abstützen der gebogenen Steuerausschnitte der Steuerschlaufe auf der rampenförmigen Anschlusskontur des Anschlussports ein Aufbringen einer Kraft auf die Halteklammer zum Offenhalten von dieser ermöglicht wird.

Vorteilhaft ist der zumindest eine Aufnahmebereich des Steckerkörpers, der dem Aufnehmen der Halteklammer dient, auf einer Seite von zumindest einem vorstehenden Kragen umgrenzt. Weiter vorteilhaft umfasst der zumindest eine vorstehende Kragen zumindest eine Aussparung zum Eintauchen der Steuerschlaufe der Halteklammer. Nicht nur die Haltearme, sondern auch der die Steuerschlaufe umfassende Bereich des Zwischenstücks der Halteklammer bewegt sich beim Verrasten in radialer Richtung auf den Anschlussport zu. Der zumindest eine Aufnahmebereich des Steckerkörpers, der zum Aufnehmen der Halteklammer dient, ist vorteilhaft von einem vorstehenden Kragen begrenzt. Um in jeder Position der Halteklammer ein Verklemmen am Steckerkörper zu vermeiden, weist dieser in dem vorstehenden Kragen zumindest eine Aussparung zum Eintauchen der Steuerschlaufe auf. Insbesondere im Auslieferungszustand des Steckerkörpers ragt ein Teil der Steuerschlaufe, insbesondere der mittlere Abschnitt des u-förmigen Schlaufenabschnitts durch die zumindest eine Aussparung im vorstehenden Kragen des Steckerkörpers hindurch.

Nach dem ersten Auftreffen der gebogenen Steuerabschnitte der Steuerschlaufe auf dem zumindest einen Rastbundabschnitt des Anschlussports des Schnellverbinders wird beim Weitergleiten beim Zusammenschieben von Steckerkörper und Anschlussport des Schnellverbinders die Haltklammer radial nach außen, also in Richtung weg von dem Anschlussport, bewegt. Die beiden Haltearme mit ihren jeweiligen konvexen Abschnitten kommen mit der zumindest teilweise rampenförmigen Anschlusskontur des Anschlussports erst dann in Kontakt, wenn die Steuerschleifen mit ihren beiden gebogenen Steuerabschnitten die zumindest eine teilweise rampenförmige Anschlusskontur bereits verlassen hat und au ßenseitig entlang des äußeren Rand- bzw. Kantenabschnitts der rampenförmigen Anschlusskontur gleitet. Sobald die beiden konvexen Abschnitte der Haltearme den äußeren Rand- bzw. Kantenabschnitt der Anschlusskontur erreichen, bewegen sie sich zunächst noch weiter radial nach außen, weg von dem Anschlussport. Hierbei treten die Haltearmenden aus dem jeweiligen ersten Rasttaschenbereich in den jeweiligen zumindest einen zweiten Rasttaschenbereich der jeweiligen Kulisse hinüber. Nach dem Überstreichen des Kanten- bzw. Randabschnitts der rampenförmigen Anschlusskontur des Anschlussports federn bzw. bewegen sich in beiden Haltearme radial in Richtung des Anschlussports nach innen, wobei zugleich die Steuerschlaufe mit ihrem u-förmigen Schlaufenabschnitt unter den zumindest einen Rastbundabschnitt des Anschlussports gleitet. Zugleich ändert sich erneut die Position der Haltarmenden und diese kehren in den jeweiligen zumindest einen ersten Rasttaschenbereich und dort in eine Endposition zurück.

In der verrasteten Endposition der Halteklammer ragen die beiden gebogenen Abschnitte der beiden Haltearme vorteilhaft radial nur noch geringfügig über den vorstehenden Kragen des Steckerkörpers hinaus. Dadurch, dass die beiden gebogenen Abschnitte der Haltearme der Halteklammer dennoch weiterhin über den vorstehenden Kragen des Steckerkörpers hinausragen, ist es möglich, den Steckerkörper auch wieder aus dem Anschlussport des Schnellverbinders zu lösen. Dies ist beispielsweise durch Eingreifen mit einem Werkzeug und radiales Wegziehen der Halteklammer nach außen, in Richtung weg von dem Anschlussport und dem Steckerkörper möglich. Bei dem vorliegenden Schnellverbinder mit der Haltklammer handelt es sich somit um ein reversibles System, das nach einem vollständig abgeschlossenen Steckvorgang auch wieder lösbar und erneut steckbar ist.

Der Steckerkörper ist in dem Anschlussport außenseitig meist nicht geführt. Ein axiales Verkippen des Steckerkörpers in dem Anschlussport wird jedoch durch die Halteklammer verhindert, da deren Haltearme und Steuerschlaufe beim Fügen von Steckerkörper und Anschlussport des Schnellverbinders für eine außenseitige Führung sorgen. Die Steuerschlaufe der Halteklammer ermöglicht eine Verringerung der axialen Biegekräfte auf die Haltearme aufgrund ihres axialen Überstands diesen gegenüber, also ihrer Erstreckung aus der ersten Ebene, in der die Haltearme der Halteklammer angeordnet sind, heraus in die zweite Ebene. Die Haltekräfte der Halteklammer am Schnellverbinder, insbesondere von dessen Anschlussport, werden auf die Steuerschlaufe und die Haltearme der Halteklammer verteilt und dann durch diese übertragen.

Die Halteklammer besteht vorzugsweise aus Metall, insbesondere bei einer vorteilhaften Anwendung im Wasserstoffbereich, also beim Durchströmen des Schnellverbinders mit Wasserstoff. Durch die Verwendung von Metall kann die Halteklammer gerade bei der Verwendung im Wasserstoffbereich, wobei also Wasserstoff als Medium durch den Schnellverbinder und Leitungen, die mit dem Schnellverbinder verbunden sind, geleitet wird, eine ausreichende Stabilität bei den dabei wirkenden Drücken und diesem Medium aufweisen.

Zur näheren Erläuterung der Erfindung werden im Folgenden Ausführungsbeispiele von dieser näher anhand der Zeichnungen beschrieben. Diese zeigen in:
- Figur 1: eine perspektivische Ansicht eines erfindungsgemäßen Schnellverbinders mit Anschlussport und Steckerkörper und erfindungsgemäßer Halteklammer,
- Figur 2: eine Seitenansicht des Schnellverbinders gemäß Figur 1 in einem Auslieferungszustand, in dem Steckerkörper und Anschlussport noch nicht ineinandergefügt sind,
- Figur 3: eine Seitenansicht des Steckerkörpers gemäß Figur 1 bzw. 2,
- Figur 4: eine gegenüber der Ansicht in Figur 3 um 90 ° gedrehte Seitenansicht des Steckerkörpers gemäß Figur 1 bzw. 2,
- Figur 5: eine Draufsicht auf den Schnellverbinder gemäß Figur 1 bzw. 2,
- Figur 6: eine Längsschnittansicht des Steckerkörpers des Schnellverbinders gemäß Figur 1 bzw. 2, geschnitten entlang der Linie A-A aus Figur 5,
- Figur 7: eine weitere Längsschnittansicht des Steckerkörpers gemäß Figur 1 bzw. 2, geschnitten entlang der Linie B-B aus Figur 5,
- Figur 8: eine Querschnittsansicht des Schnellverbinders gemäß Figur 1 im Bereich der Halteklammer,
- Figur 9: eine Draufsicht auf den Anschlussport des Schnellverbinders gemäß Figur 1 mit Halteklammer, jedoch ohne diese aufnehmendem Steckerkörper, in der Position eines ersten Kontakts von Halteklammer und rampenförmiger Anschlusskontur des Anschlussports,
- Figur 10: eine Seitenansicht des Schnellverbinders in der Position des ersten Kontakts der am Steckerkörper in zwei Aufnahmebereichen von diesem angeordneten Halteklammer und der rampenförmigen
- Figur 11: Anschlusskontur des Anschlussports zu Beginn des Steckvorgangs von Steckkörper und Anschlussport, eine Längsschnittansicht des Schnellverbinders gemäß Figur 10,
- Figur 12: eine weitere Längsschnittansicht des Schnellverbinders in der Position gemäß Figur 10,
- Figur 13: eine Seitenansicht des Schnellverbinders bei fortgesetztem Steckvorgang in einer Position eines Schlaufenabschnitts der Halteklammer am randseitigen Ende der rampenförmigen Anschlusskontur des Anschlussports,
- Figur 14: eine um 90 ° gedrehte Seitenansicht des Schnellverbinders gemäß Figur 13,
- Figur 15: eine Draufsicht auf den Schnellverbinder gemäß Figur 13,
- Figur 16: eine Längsschnittansicht durch den Schnellverbinder in der Position nach Figur 13, geschnitten entlang der Linie C-C aus Figur 15,
- Figur 17: eine weitere Längsschnittansicht des Schnellverbinders in der Position gemäß Figur 13, geschnitten entlang der Linie D-D aus Figur 15,
- Figur 18: eine Draufsicht auf den Anschlussport des Schnellverbinders gemäß Figur 1 bei fortgesetztem Steckvorgang in einer Position der Halteklammer am Anschlussport, in der diese noch frei ist, also noch kein vollständiger Steckvorgang von Steckerkörper und Anschlussport des Schnellverbinder erfolgt ist,
- Figur 19: eine Seitenansicht des Schnellverbinders in der Position gemäß Figur 18,
- Figur 20: eine gegenüber der Ansicht in Figur 19 um 90° gedrehte Seitenansicht des Schnellverbinders in der noch freien Halteklammerposition gemäß Figur 18,
- Figur 21: eine Draufsicht auf den Schnellverbinder gemäß Figur 19,
- Figur 22: eine Längsschnittansicht des Schnellverbinders in der Position gemäß Figur 19, geschnitten entlang der Linie E-E aus Figur 21,
- Figur 23: eine gegenüber der Ansicht aus Figur 22 um 90° gedrehte Längsschnittansicht des Schnellverbinders in der Position gemäß Figur 19, geschnitten entlang der Linie F-F aus Figur 21,
- Figur 24: eine Draufsicht auf den Anschlussport des Schnellverbinders in einer vollendeten Steckposition, in der die Halteklammer vollständig geschlossen, Steckerkörper und Anschlussport vollständig gesteckt und durch die Halteklammer in ihrer Steckposition gesichert sind,
- Figur 25: eine Seitenansicht des Schnellverbinders in der vollständig gesteckten Position von Steckerkörper und Anschlussport mit geschlossener Halteklammer,
- Figur 26: eine gegenüber der Ansicht in Figur 25 um 90° gedrehte Seitenansicht des Schnellverbinders,
- Figur 27: eine Draufsicht auf den Schnellverbinder gemäß Figur 25,
- Figur 28: eine Längsschnittansicht durch den Schnellverbinder gemäß Figur 25, geschnitten entlang der Linie H-H aus Figur 27,
- Figur 29: eine gegenüber der Ansicht in Figur 28 um 90° gedrehte Längsschnittansicht des Schnellverbinders gemäß Figur 25, geschnitten entlang der Linie I-I aus Figur 27,
- Figur 30: eine Querschnittsansicht des Schnellverbinders in der vollständig geschlossenen Position gemäß Figur 25, geschnitten im Bereich der Halteklammer,
- Figur 31: eine Draufsicht auf eine erfindungsgemäße Halteklammer,
- Figur 32: eine Seitenansicht der Halteklammer gemäß Figur 31, und
- Figur 33: eine um 90° gegenüber der Ansicht in Figur 32 gedrehte Seitenansicht der Halteklammer gemäß Figur 31.

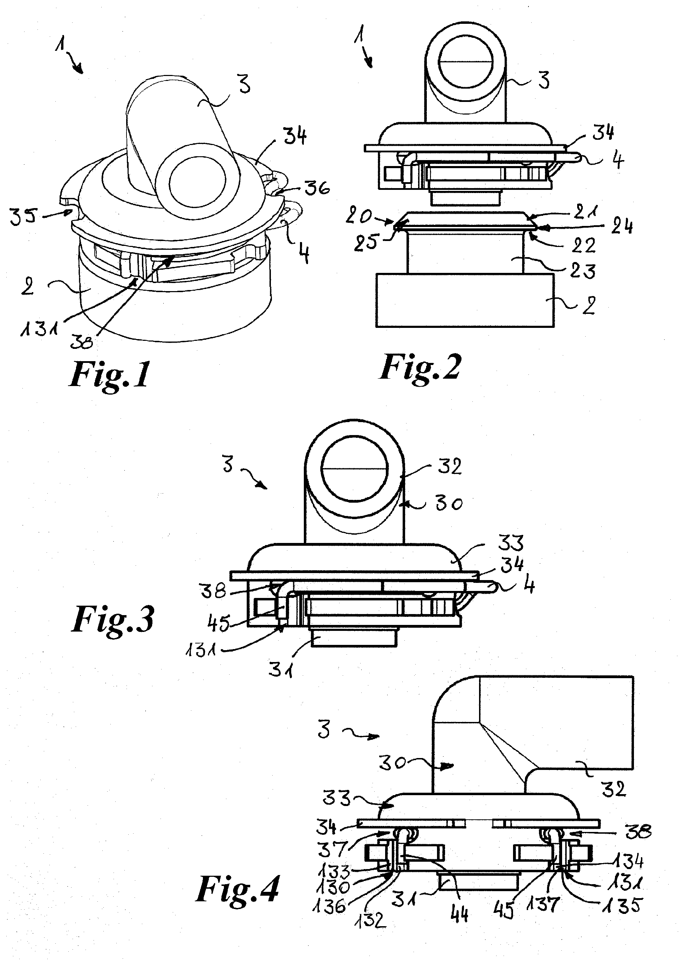

In Figur 1 ist ein Schnellverbinder 1, umfassend einen Anschlussport 2 und einen Steckerkörper 3 in einer gesteckten Position gezeigt. Zum Sichern der Steckposition von Steckerkörper 3 im Anschlussport 2 nach vollständigem Vollenden eines Steckvorgangs ist an dem Steckerkörper 3 eine Halteklammer 4 angeordnet, die an einem Rastbundabschnitt 22 des Anschlussports 2 beim Erreichen einer vollendeten Steckposition des Schnellverbinders 1 verrastet. Wie besser Figur 2 entnommen werden kann, umfasst der Anschlussport 2 in seinem in Richtung des Steckerkörpers 3 gerichteten oberen Bereich 20 eine Rastkontur 25 mit einer rampenförmigen Anschlusskontur 21 auf ihrer Oberseite und einem umlaufenden Rastbund bzw. den Rastbundabschnitt 22 auf ihrer Unterseite.

Ferner umfasst der Anschlussport 2 benachbart zu dem Rastbundabschnitt 22 einen etwa zylindrischen Portabschnitt 23. Im Übergangsbereich zwischen der umlaufenden rampenförmigen Anschlusskontur 21 und dem Rastbundabschnitt 22 ist außenseitig umlaufend eine schmale Kante 24 an der Rastkontur 25 ausgebildet. Auch die schmale Kante 24 ist hier vollständig umlaufend um den Anschlussport 2 ausgebildet. Alternativ zu einer vollständig um den Anschlussport 2 umlaufenden rampenförmigen Anschlusskontur 21 und einem entsprechend umlaufenden Rastbundabschnitt 22 sowie einer umlaufenden schmalen Kante 24 zwischen diesen können lediglich einzelne Abschnitte bzw. Segmente vorgesehen werden. Sowohl die rampenförmige Anschlusskontur 21 als auch der Rastbundabschnitt 22 dienen dem Zusammenwirken mit der Halteklammer 4 während des Steckvorgangs von Steckerkörper 3 und Anschlussport 2.

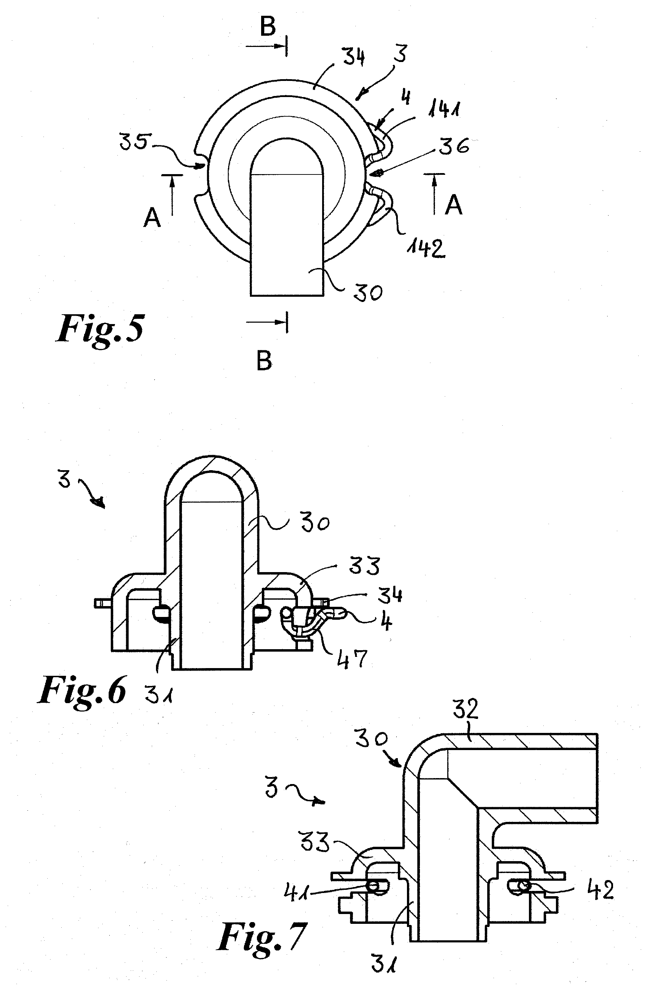

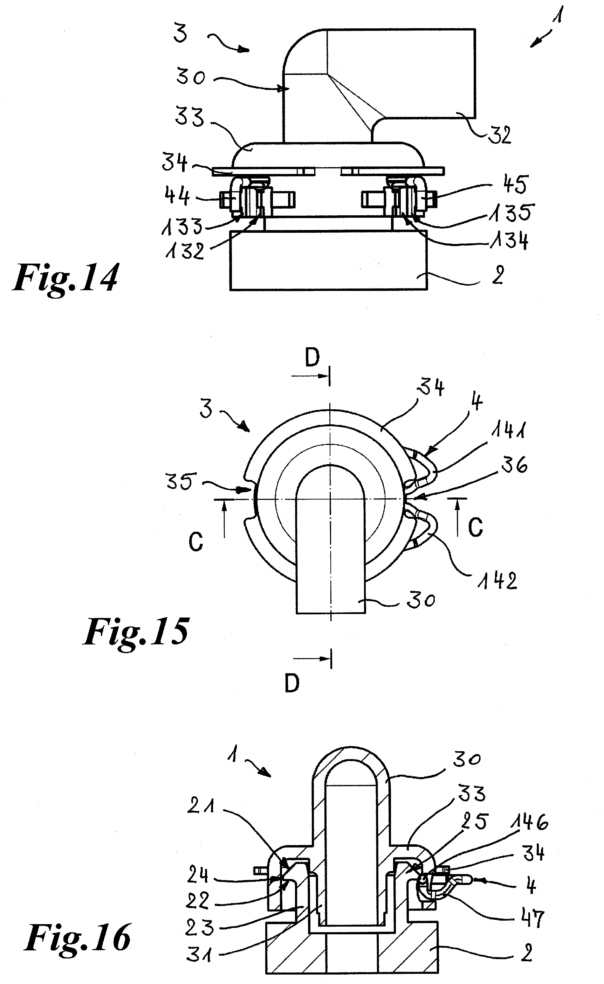

Der Steckerkörper 3 weist, wie den Figuren 2 bis 4 besonders gut entnommen werden kann, einen Leitungsanschlussstutzen 30 zum Anschließen einer nicht gezeigten Medienleitung am Schnellverbinder 1 bzw. dessen Steckerkörper 3 auf. Der Leitungsanschlussstutzen 30 ist hier als Winkelstutzen ausgebildet, wie insbesondere der Seitenansicht in Figur 4 und auch Figur 1 entnommen werden kann. Wie ferner den Schnittansichten in den Figuren 6 und 7 gut entnommen werden kann, weist der Leitungsanschlussstutzen 30 des Steckerkörpers 3 einen Steckabschnitt 31 auf, der zum Verbinden mit dem Anschlussport 2 dient. Dieser ragt beim Steckvorgang von Steckerkörper 3 und Anschlussport 2 in den zylindrischen Portabschnitt 23 des Anschlussports 2 hinein, wie beispielsweise Figur 16 entnommen werden kann. Den Steckabschnitt 31 umgebend, mit Abstand zu diesem, ist ein glockenförmiger Hüllabschnitt 33, der einteilig mit dem Leitungsanschlussstutzen 30 ausgebildet ist, gebildet. Der glockenförmige Hüllabschnitt 33 umfasst einen vorstehenden Kragen 34, der mit zwei einander gegenüberliegenden Aussparungen 35, 36 versehen ist, wie insbesondere Figur 1 und 5 entnommen werden kann. Auf der dem abgewinkelten Abschnitt 32 des Leitungsanschlussstutzens 30 abgewandten Seite des vorstehenden Kragens 34 sind an dem glockenförmigen Hüllabschnitt 33 ferner zwei einander gegenüberliegende Aufnahmebereiche 37, 38 zum Aufnehmen der Halteklammer 4 ausgebildet. Die beiden Aufnahmebereiche 37, 38 erstrecken sich einerseits unterhalb des vorstehenden Kragens 34 entlang von diesem, andererseits etwa rechtwinklig von diesem weg abgewinkelt, in Form von zwei Kulissen 130, 131. Die beiden Kulissen 130, 131 umfassen jeweils zwei Rasttaschenbereiche 132, 133 bzw. 134, 135 mit jeweils dazwischen angeordneter vorkragender Kante 136 bzw. 137 die jeweils die beiden Rasttaschenbereiche 132, 133 bzw. 134, 135 voneinander trennt. Dies kann insbesondere den Figuren 3 und 4 und zum Teil auch Figur 1 entnommen werden.

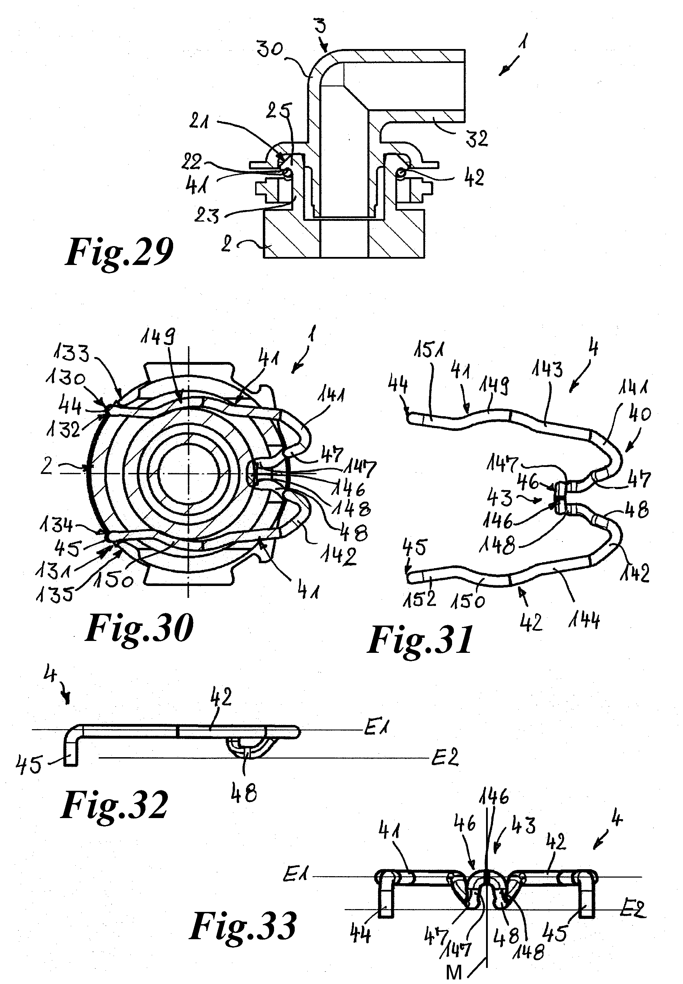

Die Halteklammer 4 ist in der Draufsicht zumindest im Wesentlichen symmetrisch zu einer Mittelachse M aufgebaut bzw. ausgebildet (siehe Figur 33), hier in der Draufsicht etwa w-förmig, wie insbesondere Figur 31 besonders gut entnommen werden kann. Sie umfasst ein Zwischenstück 40 sowie zwei sich an dieses anschließende Haltearme 41, 42. Das Zwischenstück 40 umfasst eine Steuerschlaufe 43. Die Steuerschlaufe 43 erstreckt sich in der Draufsicht auf die Halteklammer 4 (siehe Figur 31) räumlich zwischen den Haltearmen 41, 42. Die beiden Haltearme 41, 42 umfassen jeweils ein Haltearmende 44 bzw. 45. Die Haltearme 41, 42 erstrecken sich ansonsten etwa in einer ersten Ebene E1, wie ebenfalls den Figur 32 und 33 entnommen werden kann. Die beiden Haltearmenden 44, 45 sind endseitig an den Haltearmen 41, 42 etwa rechtwinklig aus der ersten Ebene E1 heraus abgebogen, wie den Figuren 32 und 33 besonders gut entnommen werden kann. Die Steuerschlaufe 43 weist einen mittleren Abschnitt 146 eines u-förmigen Schlaufenabschnitts 46 auf, der sich etwa in der ersten Ebene E1 erstreckt. Sie erstreckt sich ausgehend von diesem aus der ersten Ebene E1 heraus in eine zweite Ebene E2, wie den Figuren 32 und 33 zu entnehmen ist. Der u-förmige Schlaufenabschnitt 46 der Steuerschlaufe 43, der sich aus der ersten Ebene E1 heraus erstreckt, geht in zwei gebogene Steuerabschnitte 47, 48 über. Die Steuerschlaufe 43 ist somit so geformt, dass sie sich aus der ersten Ebene E1 mit ihren beiden gebogenen Steuerabschnitten 47, 48 in die zweite Ebene E2 und aus dieser wieder zurück in die erste Ebene E1 erstreckt. Die beiden gebogenen Steuerabschnitte 47, 48 ragen somit in dieselbe Richtung wie die beiden Haltearmenden 44, 45 aus der ersten Ebene E1 heraus in die zweite Ebene E2 hinein und aus dieser auch wieder zurück in die erste Ebene, wobei sich jedoch die beiden Haltearmenden 44, 45 weiter aus der ersten Ebene E1 heraus erstrecken als die beiden gebogenen Steuerabschnitte 47, 48. Die beiden gebogenen Steuerabschnitte 47, 48 dienen beim Fügevorgang von Steckerkörper 3 und Anschlussport 2 zum ersten Aufstützen und zum Herabgleiten entlang der rampenförmigen Anschlusskontur 21 des Anschlussports 2.

Wie Figur 31 weiter entnommen werden kann, ebenso Figur 33, erstrecken sich die beiden sich vom mittleren Abschnitt 146 des u-förmigen Schlaufenabschnitts 46 in Richtung der beiden gebogenen Steuerabschnitte 47, 48 erstreckenden Schenkel 147, 148 des u-förmigen Schlaufenabschnitts 46 mit etwa gleichbleibendem Abstand zueinander, während die beiden sich an diese Schenkel 147, 148 anschließenden gebogenen Steuerabschnitte 47, 48 nicht nur in die zweite Ebene E2 hinein, sondern hierbei auch radial voneinander weg gekrümmt sind. Die beiden gebogenen Steuerabschnitte 47, 48 weisen somit eine zweifache Krümmung in zwei unterschiedliche Raumrichtungen auf, insbesondere eine mehrfache Kröpfung in unterschiedliche Raumrichtungen. Betrachtet man die Formgebung bzw. Krümmung der beiden Steuerabschnitte 47, 48 in umgekehrter Richtung, also ausgehend von den beiden Haltearmen 41, 42, sind die beiden Steuerabschnitte 47, 48 radial nach innen in Richtung zu der Mittelachse M der Halteklammer 4 eingezogen bzw. tailliert und zugleich in die zweite Ebene E2 gebogen.

Die beiden gebogenen Steuerabschnitte 47, 48 gehen in Richtung der beiden Haltearme 41, 42 in zwei gebogene Abschnitte 141, 142 der beiden Haltearme 41, 42 über, wie Figur 31 entnommen werden kann. Die Krümmung der beiden gebogenen Abschnitte 141, 142 der beiden Haltearme 41, 42 ist nicht gleichmäßig, vielmehr weitet sich die Halteklammer in diesem Bereich auf, so dass ein gewünschter Abstand zwischen den beiden Haltearmen 41, 42 in dem Bereich der beiden gebogenen Abschnitte 141, 142 erzeugt wird. Im Anschluss an die beiden gebogenen Abschnitte 141, 142 der beiden Haltearme 41, 42 ist jeweils ein zumindest im Wesentlichen gerader Abschnitt 143 bzw. 144 der beiden Haltearme 41, 42 gebildet. Die Haltearme 41, 42 sind somit im Bereich ihrer geraden Abschnitte 143, 144 zumindest im Wesentlichen nicht gekrümmt. Die beiden geraden Abschnitte 143, 144 der beiden Haltearme 41, 42 gehen im weiteren Verlauf von diesen in einen jeweiligen konvexen Abschnitt 149, 150 über. Auch mit diesen beiden konvexen Abschnitten 149, 150 kann sich die Halteklammer 4 im Verlaufe des Steckvorgangs von Steckerkörper 3 und Anschlussport 2 auf der rampenförmigen Anschlusskontur 21 des Anschlussports 2 auflegen und entlang von dieser gleiten. Die beiden Haltearme 41, 42 weisen im Anschluss an den jeweiligen konvexen Abschnitt 149, 150 jeweils einen etwa geraden Abschnitt 151, 152 auf. Endseitig an dem jeweiligen geraden Abschnitt 151, 152 sind die bereits erwähnten Haltearmenden 44, 45 den geraden Abschnitten 151, 152 gegenüber etwa rechtwinklig abgewinkelt angeordnet.

Im Auslieferungszustand des Schnellverbinders 1, wie er in den Figuren 2 bis 8, insbesondere den Figuren 2, 5 und 8, gezeigt ist, ist die Halteklammer 4 in einer freien Position am Steckerkörper 3 in dessen entsprechenden Aufnahmebereichen 37, 38 angeordnet. Die beiden Haltearmenden 44, 45 der beiden Haltearme 41, 42 der Halteklammer 4 sind hierbei aufgenommen in dem jeweiligen ersten Rasttaschenbereich 132 der Kulisse 130 bzw. 134 der Kulisse 131. In diesem Auslieferungszustand stützt sich kein Abschnitt der Halteklammer 4 auf der rampenförmigen Anschlusskontur 21 des Anschlussports 2 ab.

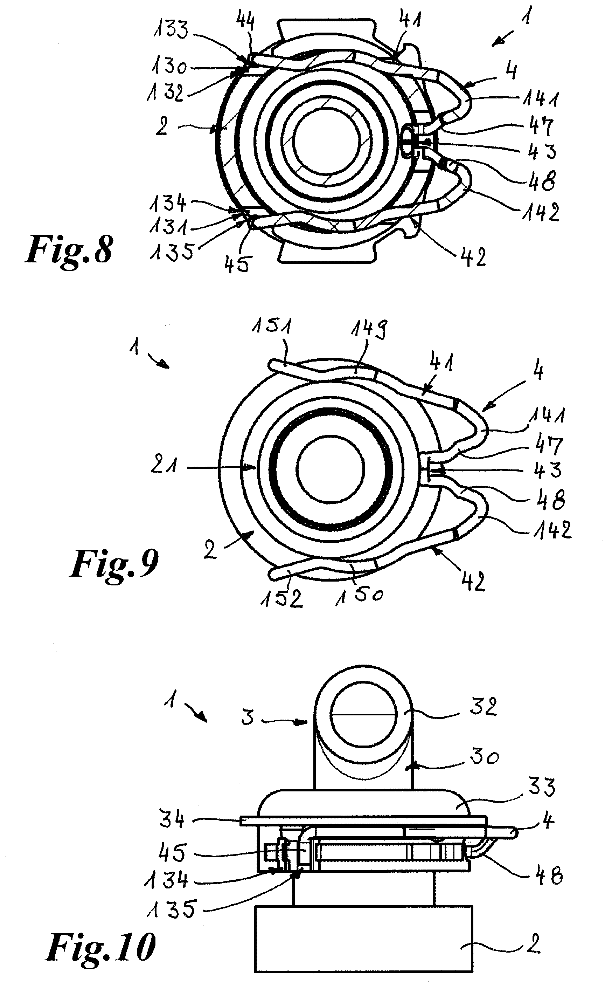

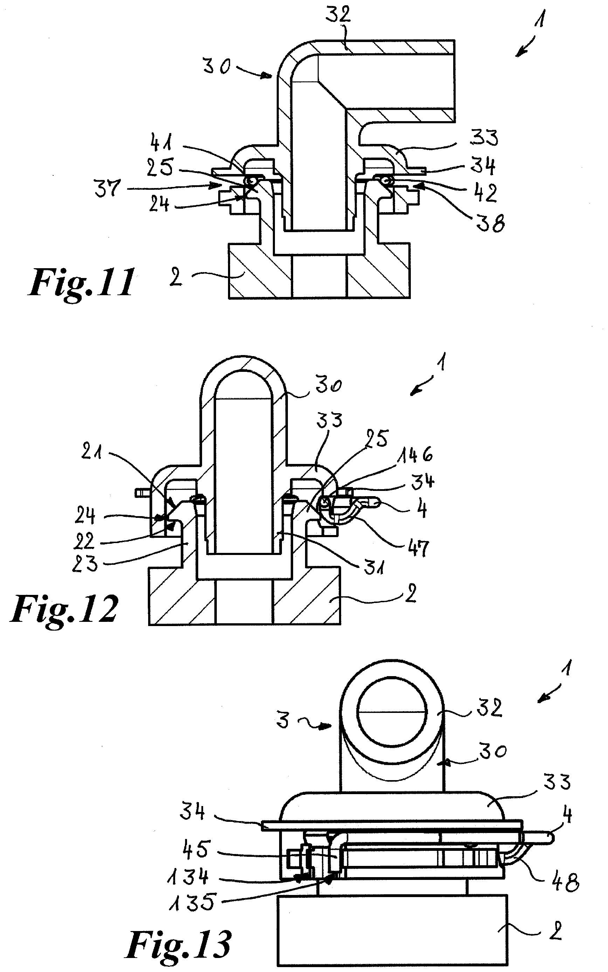

Dies ändert sich erst zu Beginn des Steckvorgangs des Schnellverbinders 1, also beim Einstecken des Steckerkörpers 3 in den Anschlussport 2, wie in Figur 10 bis 12 gezeigt. Wie der Draufsicht auf den Anschlussport 2 in Figur 9 und der Schnittansicht in Figur 12 entnommen werden kann, stützen sich die beiden gebogenen Steuerabschnitte 47, 48 der Steuerschlaufe 43 der Halteklammer 4 hierbei auf der rampenförmigen Anschlusskontur 21 des Anschlussports 2 ab und gleiten beim weiteren Bewegen des Steckerkörpers 3 in Richtung des Anschlussports 2 entlang der rampenförmigen Anschlusskontur 21 radial nach außen bezüglich des Anschlussports 2, so dass sich in der in Figur 9 gezeigten Draufsicht auf den Anschlussport 2 mit Halteklammer 4 die Halteklammer in Richtung nach rechts bzw. radial nach außen, weg von dem Anschlussport 2 bewegt. Die beiden Haltearme 41, 42 liegen partiell ebenfalls auf der rampenförmigen Anschlusskontur 21 des Anschlussports 2 auf, die der Schnittansicht in Figur 11 entnommen werden kann.

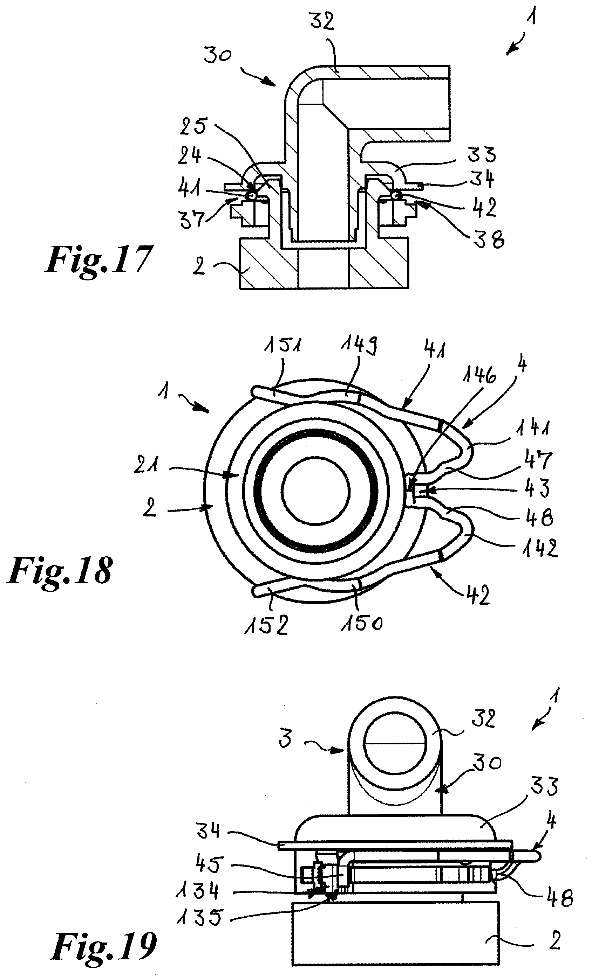

Während des ersten Gleitens der beiden gebogenen Steuerabschnitte 47, 48 der Steuerschlaufe 43 der Halteklammer 4 entlang der rampenförmigen Anschlusskontur 21 des Anschlussports 2 gelangen die beiden Haltearme 41, 42 der Halteklammer 4 jedoch noch nicht mit ihren konvexen Abschnitten 149, 150 in Kontakt mit der rampenförmigen Anschlusskontur 21. Erst dann, wenn die beiden gebogenen Steuerabschnitte 47, 48 der Steuerschlaufe 43 die schmale Kante 24 im Übergang von der rampenförmigen Anschlusskontur 21 zum Rastbundabschnitt 22 erreichen, gelangen die beiden Haltearme 41, 42 mit ihren konvexen Abschnitten 149, 150 in Kontakt mit der rampenförmigen Anschlusskontur 21. Sie gleiten beim weiteren Bewegen des Steckerkörpers 3 in Richtung des Anschlussports 2 zur schmalen Kante 24, die randseitig die rampenförmige Anschlusskontur 21 des Anschlussports 2 im Übergang zu dem Rastbundabschnitt 22 auf der Unterseite der Rastkontur 25 des Anschlussports 2 begrenzt. Während des Überstreichens der rampenförmigen Anschlusskontur 21 durch die beiden konvexen Abschnitte 149, 150 der beiden Haltearme 41, 42 der Halteklammer 4 werden die beiden Haltearme 41, 42 radial nach außen bewegt und dementsprechend auch ihre jeweiligen endseitigen Haltearmenden 44, 45 innerhalb der beiden ersten Rasttaschenbereiche 133 bzw. 135 der beiden Kulissen 130, 131 weit nach außen zum randseitigen Ende des jeweiligen Rasttaschenbereichs 133 bzw. 135. Die Position, in der die beiden Haltearme 41, 42 mit ihren konvexen Abschnitten 149, 150 die umlaufende schmale Kante 24 am randseitigen Ende der rampenförmigen Anschlusskontur 21 erreichen, ist den Figuren 16 und 17 zu entnehmen.

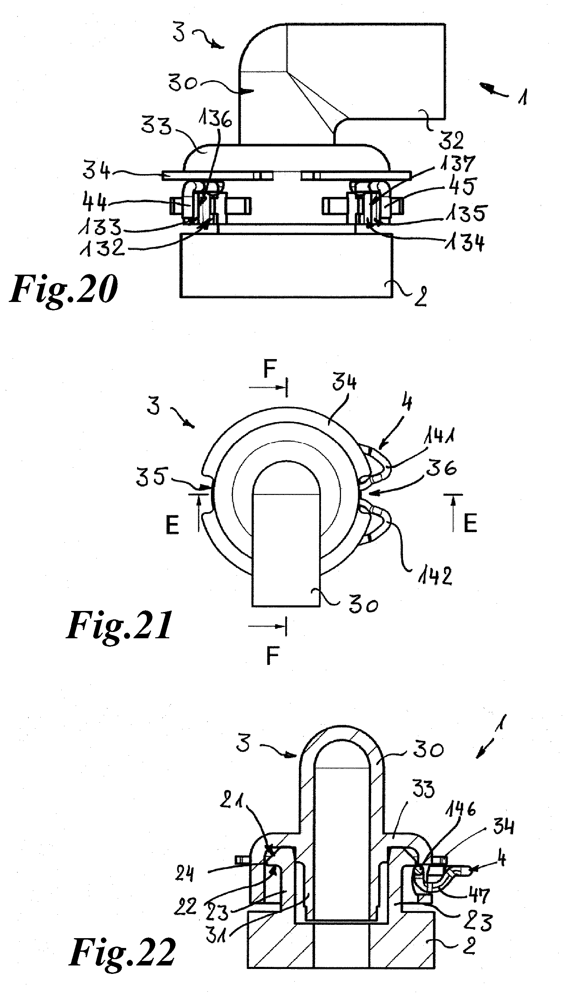

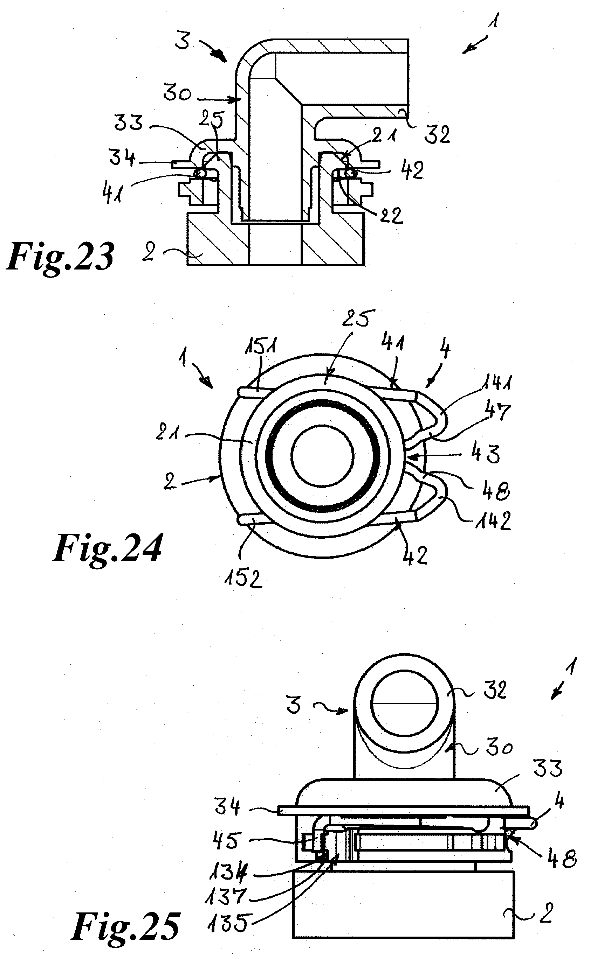

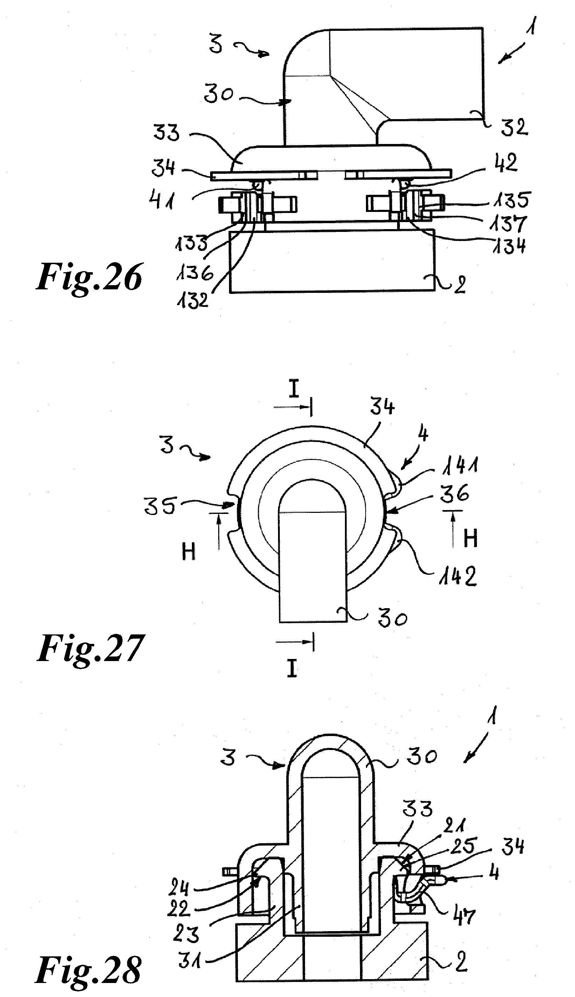

Wie insbesondere den Figuren 18 bis 23 zu entnehmen ist, die die noch freie Halteklammer 4 in deren Position nach Verlassen der schmalen Kante 24 zeigen, wird die Halteklammer durch die Steuerschlaufe 43 auch dabei weiterhin offen gehalten. Erst dann, wenn die Steuerschlaufe 43 mit ihrem mittleren Abschnitt 146 auf die Unterseite der rampenförmigen Anschlusskontur 21, somit an den Rastbundabschnitt 22 gelangt, bewegt sich die Halteklammer 4 radial wieder zurück in Richtung des Anschlussports 2 bzw. von dessen zylindrischem Portabschnitt 23. Hierdurch wird es den beiden Haltearmen 41, 42 ermöglicht, sich in Richtung des zylindrischen Portabschnitts 23 ebenfalls radial unter den Rastbundabschnitt 22 zu bewegen. Durch diese Radialbewegung der beiden Haltearme 41, 42 in Richtung des Anschlussports 2 und zugleich die Radialbewegung der Steuerschlaufe 43 in Richtung des zylindrischen Portabschnitts 23 bewegen sich die beiden Haltearmenden 44, 45 aus ihrer Position in dem jeweiligen ersten Rasttaschenbereich 132, 134 der beiden Kulissen 130, 131 in den jeweiligen zweiten Rasttaschenbereich 133, 135 von diesen, überstreichen hierbei somit die jeweilige Kante 136 bzw. 137 zwischen dem ersten Rasttaschenbereich 132 und dem zweiten Rasttaschenbereich 133 bzw. dem ersten Rasttaschenbereich 134 und dem zweiten Rasttaschenbereich 135. Dies kann insbesondere den Figuren 24 bis 30 besonders gut entnommen werden. Die in diesen gezeigte Position der Halteklammer 4 ist deren geschlossene Position, in der der abgeschlossene Steckvorgang von Steckerkörper 3 und Anschlussport 2 durch die Halteklammer 4 verriegelt wird. Ohne Lösen der Halteklammer 4 ist somit ein Lösen der Steckverbindung des Steckverbinders 1 bzw. von dessen Steckerkörper 3 und Anschlussport 2 nicht möglich. Allerdings kann durch Eingreifen eines geeigneten Werkzeugs in den ersten gebogenen Abschnitt 141 und den zweiten gebogenen Abschnitt 142 der Haltearme 41, 42 und radiales Nachaußenziehen der Halteklammer 4, also weg von dem Anschlussport 2 und dem in diesen eingefügten Steckerkörper 3, die Steckverbindung von diesen wieder gelöst werden. Bei einem solchen radialen Nachaußenziehen werden die beiden Haltearme 41, 42 der Halteklammer 4 wieder aus ihrer Verrastungsposition gelöst und somit der Steckerkörper vom Anschlussport, so dass ein Entfernen des Steckerkörpers 3 vom Anschlussport 2 nachfolgend wieder möglich ist.

Die Gefahr von Fehlsteckungen kann durch die besondere Geometrie der Halteklammer 4 mit der Steuerschlaufe 43 und insbesondere deren u-förmigem Schlaufenabschnitt 46 und den beiden gebogenen Steuerabschnitten 47, 48 sicher vermieden werden, da durch Aufstützen der beiden gebogenen Steuerabschnitte 47, 48 auf der rampenförmigen Anschlusskontur 21 des Anschlussports 2 so lange eine axiale Führung für den Steckerkörper 3 zur Verfügung steht, bis der Steckvorgang vollständig abgeschlossen ist. Hierdurch wird nicht nur eine Führung für den Steckerkörper 3 beim Einfügen in den Anschlussport 2 vorgesehen, sondern auch eine erhöhte Stecksicherheit geschaffen. Fehlsteckungen können sicher vermieden werden, da die Halteklammer bis zum Erreichen der endgültigen Steckposition durch die Steuerschlaufe 43 offengehalten wird, somit so lange keine Verriegelung von Steckerkörper 2 und Anschlussport 3 erfolgt, wie nicht eine vollständige Steckung von diesen erfolgt ist.

Der Schnellverbinder 1 mit seinem Steckerkörper 3 und Halteklammer 4 sowie Anschlussport 2 eignet sich insbesondere für Wasserstoffanwendungen, da gerade bei diesen eine hohe Stecksicherheit gegeben sein sollte. Gegenüber den Lösungen des Standes der Technik ist ferner eine Kostenreduzierung möglich. Insbesondere besteht die Halteklammer aus Metall.

Aufgrund des Vorsehens der rampenförmigen Anschlusskontur 21 des Anschlussports 2 ergibt sich eine steckkraftmindernde Wirkung beim Steckvorgang, so dass dieser erleichtert wird gegenüber den Lösungen des Standes der Technik. Ferner verringert die Steuerschlaufe 43 axiale Biegekräfte auf die Haltearme 41, 42. Die Haltekräfte werden durch die Steuerschlaufe 43 erzeugt, wenn diese sich am Rastbundabschnitt 22 des Anschlussports 2 abstützt.

Zum Abdichten und zum Toleranzausgleich bzw. Ausgleich von Abständen zwischen dem Steckerkörper 3 und dem Anschlussport 2 können z.B. eine Anschlussbuchse, ein Distanzring sowie ein oder mehrere Dichtringe, wie O-Ringe, den Steckabschnitt 31 des Steckerkörpers 3 umgebend zwischen diesem und der Innenseite des Anschlussports 2 im Bereich von dessen zylindrischem Portabschnitt 23 angeordnet werden. Dies ist jedoch in den Figuren nicht gezeigt.

Neben den im Vorstehenden beschriebenen und in den Figuren gezeigten Ausführungsvarianten der Halteklammer für einen Schnellverbinder, wobei die Halteklammer zumindest zwei Haltearme und zumindest ein zwischen diesen angeordnetes und diese verbindendes Zwischenstück umfasst, können noch zahlreiche weitere gebildet werden, insbesondere auch diverse Kombinationen der vorstehend genannten Merkmale von dieser, wobei die Haltearme der Halteklammer sich im Wesentlichen in einer ersten Ebene erstrecken und das zumindest eine Zwischenstück der Halteklammer zumindest eine Steuerschlaufe umfasst, wobei zumindest ein Teil des zumindest einen Zwischenstücks bzw. der zumindest einen Steuerschlaufe sich aus der ersten Ebene heraus in zumindest eine zweite Ebene und aus dieser bzw. diesen wieder heraus zurück in die erste Ebene erstreckt bzw. erstrecken. Zur Aufnahme von Haltearmenden der Haltearme der Halteklammer weist der Steckerkörper des Schnellverbinders zumindest zwei Kulissen mit jeweils zumindest zwei Rasttaschenbereichen auf, wobei die Haltearme der Halteklammer je nach Steckposition bzw. Verrastungsposition sich in einem anderen Rasttaschenbereich der beiden Kulissen am Steckerkörper befinden.

### Bezugszeichenliste

- 1: Schnellverbinder
- 2: Anschlussport
- 3: Steckerkörper
- 4: Halteklammer
- 20: oberer Bereich
- 21: rampenförmige Anschlusskontur
- 22: Rastbundabschnitt
- 23: zylindrischer Portabschnitt
- 24: schmale Kante
- 25: Rastkontur
- 30: Leitungsanschlussstutzen
- 31: Steckabschnitt
- 32: abgewinkelter Abschnitt
- 33: glockenförmiger Hüllabschnitt
- 34: vorstehender Kragen
- 35: Aussparung
- 36: Aussparung
- 37: Aufnahmebereich
- 38: Aufnahmebereich
- 40: Zwischenstück
- 41: erster Haltearm
- 42: zweiter Haltearm
- 43: Steuerschlaufe
- 44: Haltearmende von 41
- 45: Haltearmende von 42
- 46: u-förmiger Schlaufenabschnitt
- 47: gebogener Steuerabschnitt
- 48: gebogener Steuerabschnitt
- 130: Kulisse
- 131: Kulisse
- 132: erster Rasttaschenbereich von 130
- 133: zweiter Rasttaschenbereich von 130
- 134: erster Rasttaschenbereich von 131
- 135: zweiter Rasttaschenbereich von 131
- 136: Kante zwischen 132, 133
- 137: Kante zwischen 134, 135
- 141: erster gebogener Abschnitt
- 142: zweiter gebogener Abschnitt
- 143: gerader Abschnitt
- 144: gerader Abschnitt
- 146: mittlerer Abschnitt
- 147: erster Schenkel
- 148: zweiter Schenkel
- 149: konvexer Abschnitt
- 150: konvexer Abschnitt
- 151: gerader Abschnitt
- 152: gerader Abschnitt
- E1: erste Ebene
- E2: zweite Ebene
- M: Mittelachse

## Patentansprüche

1. Halteklammer (4) für einen Schnellverbinder (1), wobei die Halteklammer (4) zumindest zwei Haltearme (41, 42) und zumindest ein zwischen diesen angeordnetes und diese verbindendes Zwischenstück (40) umfasst, und wobei die Haltearme (41, 42) der Halteklammer (4) sich zumindest im Wesentlichen in einer ersten Ebene (E1) erstrecken,
**dadurch gekennzeichnet, dass**
das zumindest eine Zwischenstück (40) der Halteklammer (4) zumindest eine Steuerschlaufe (43) umfasst, wobei zumindest ein Teil des zumindest einen Zwischenstücks (40) und/oder der zumindest einen Steuerschlaufe (43) sich aus der ersten Ebene (E1) heraus in eine zweite Ebene (E2) und aus dieser/diesen wieder zurück in die erste Ebene (E1) erstreckt/erstrecken.

2. Halteklammer (4) nach Anspruch 1,
**dadurch gekennzeichnet, dass**
die Steuerschlaufe (43) einen mittleren Schlaufenabschnitt und zwei sich an diesen anschließende zumindest zweifach gebogene Steuerabschnitte (47, 48) umfasst.

3. Halteklammer (4) nach Anspruch 2,
**dadurch gekennzeichnet, dass**
die zweifach gebogenen Steuerabschnitte (47, 48) der Steuerschlaufe (43) in zwei Richtungen gekrümmt oder gekröpft sind, wobei sie radial in Richtung auf eine Mittelachse (M) der Halteklammer (4) eingezogen oder tailliert sind und sich in Höhenerstreckung der Halteklammer (4) von dem in der ersten Ebene (E1) angeordneten mittleren Schlaufenabschnitt der Steuerschlaufe (43) ausgehend in die zweite Ebene (E2) und aus dieser wieder zurück in die erste Ebene (E1) erstrecken.

4. Halteklammer (4) nach Anspruch 1 oder 2,
**dadurch gekennzeichnet, dass**
die Steuerschlaufe (43) als mittleren Schlaufenabschnitt einen u-förmigen Schlaufenabschnitt (46) und die beiden sich an diesen beidseitig anschließenden, sich in die zweite Ebene (E2) und wieder zurück in die erste Ebene (E1) erstreckenden und an die Haltearme (41, 42) der Halteklammer (4) anschließenden, zweifach gebogenen Steuerabschnitte (47, 48) umfasst.

5. Halteklammer (4) nach Anspruch 4,
**dadurch gekennzeichnet, dass**
nur ein mittlerer Abschnitt (146) des u-förmigen Schlaufenabschnitts (46) sich etwa in der ersten Ebene (E1) erstreckt.

6. Halteklammer (4) nach einem der vorstehenden Ansprüche,
**dadurch gekennzeichnet, dass**
die Haltearme (41, 42) ein jeweiliges Haltearmende (44, 45) umfassen, das gegenüber der Erstreckung der Haltearme (41, 42) in der ersten Ebene (E1) von diesen abgewinkelt ist, insbesondere rechtwinklig von diesen abgewinkelt ist.

7. Halteklammer (4) nach einem der vorstehenden Ansprüche,
**dadurch gekennzeichnet, dass**
die Halteklammer (4) in der Draufsicht etwa w-förmig ist, wobei sich die Steuerschlaufe (43) in der Draufsicht auf die Halteklammer (4) räumlich zwischen den Haltearmen (41, 42) erstreckt.

8. Halteklammer (4) nach einem der vorstehenden Ansprüche,
**dadurch gekennzeichnet, dass**
die Haltearme (41, 42) der Halteklammer (4) jeweils einen konvexen Abschnitt (149, 150), zumindest einen geraden Abschnitt (143, 144) und einen gebogenen Abschnitt (141, 142) umfassen, mit dem sie sich an die Steuerschlaufe (43), insbesondere deren gebogene Steuerabschnitte (47, 48), anschließen.

9. Halteklammer (4) nach einem der vorstehenden Ansprüche,
**dadurch gekennzeichnet, dass**
die Halteklammer (4) aus Metall besteht.

10. Schnellverbinder (1) mit zumindest einer Halteklammer (4) nach einem der vorstehenden Ansprüche, wobei der Schnellverbinder (1) zumindest einen Anschlussport (2) mit zumindest teilweise rampenförmiger Anschlusskontur (21) und zumindest einem Rastbundabschnitt (22) und zumindest einen Steckerkörper (3) umfasst und die zumindest eine Halteklammer (4) Haltearme (41, 42) mit Haltearmenden (44, 45) aufweist,
**dadurch gekennzeichnet, dass**
der zumindest eine Steckerkörper (3) zur Aufnahme der zumindest einen Halteklammer (4) ausgebildet ist und dient, wobei der zumindest eine Steckerkörper (3) zumindest zwei Kulissen (130, 131) mit jeweils zumindest zwei Rasttaschenbereichen (132, 133, 134, 135) zur Aufnahme der Haltearmenden (44, 45) der Halteklammer (4) aufweist.

11. Schnellverbinder (1) nach Anspruch 10,
**dadurch gekennzeichnet, dass**
zwischen den zumindest zwei Rasttaschenbereichen (132, 133, 134, 135) der zumindest zwei Kulissen (130, 131) jeweils zumindest eine Kante (136, 137) zum Abtrennen der zumindest zwei Rasttaschenbereiche (132, 133, 134, 135) voneinander angeordnet ist.

12. Schnellverbinder (1) nach Anspruch 10 oder 11,
**dadurch gekennzeichnet, dass**
der Anschlussport (2) zumindest eine Rastkontur (25) aufweist, die den zumindest einen Rastbundabschnitt (22) umfasst, der dem Angreifen durch zumindest eine Steuerschlaufe (43) der Halteklammer (4) dient, insbesondere die zumindest eine Rastkontur (25) den zumindest einen Rastbundabschnitt (22) auf ihrer Unterseite und die zumindest eine rampenförmige Anschlusskontur (21) zum Aufstützen der Halteklammer (4) mit ihren gebogenen Steuerabschnitten (47, 48) auf ihrer Oberseite umfasst.

13. Schnellverbinder (1) nach einem der Ansprüche 10 bis 12,
**dadurch gekennzeichnet, dass**
der Steckerkörper (3) zumindest einen Aufnahmebereich (37, 38) zum Aufnehmen der Halteklammer (4) aufweist, wobei der zumindest eine Aufnahmebereich (37, 38) auf einer Seite von zumindest einem vorstehenden Kragen (34) umgrenzt ist und der zumindest eine vorstehende Kragen (34) zumindest eine Aussparung (35, 36) zum Eintauchen der Steuerschlaufe (43) der Halteklammer (4) umfasst.
